# EUROPEAN PATENT SPECIFICATION

(11) **EP 4 644 858 B1**
(45) Date of publication and mention of the grant of the patent: **11.11.2026**
(21) Application number: 25172740.0
(22) Date of filing: 25.04.2025
(51) Int. Cl.: G01M 11/00

(54) **CORRECTION TECHNIQUE FOR CODED SEQUENCE OTDR**
KORREKTURVERFAHREN FÜR OTDR MIT CODIERTER SEQUENZ
TECHNIQUE DE CORRECTION POUR OTDR À SÉQUENCE CODÉE

(30) Priority: 30.04.2024 US 202463640548 P
(43) Date of publication of application: 05.11.2025
(73) Proprietor: EXFO Inc., Québec, QC G1M 2K2 (CA)
(72) Inventor: LECLERC, Michel, Québec, G1M 2K2 (CA); NOEL PARISE, Sammy, Québec, G1M 2K2 (CA)
(74) Representative: Gregory, Alexandra Louise

(56) References cited:
- LIAO RUOLIN ET AL: "Harnessing oversampling in correlation-coded OTDR", OPTICS EXPRESS, vol. 27, no. 2, 18 January 2019 (2019-01-18), US, pages 1693, XP093309762, ISSN: 1094-4087, DOI: 10.1364/OE.27.001693
- DUCKEY LEE ET AL: "Optimization of SNR improvement in the noncoherent OTDR based on simplex codes", JOURNAL OF LIGHTWAVE TECHNOLOGY, vol. 24, no. 1, 1 January 2006 (2006-01-01), USA, pages 322 - 328, XP055568186, ISSN: 0733-8724, DOI: 10.1109/JLT.2005.859437

## Description

### TECHNICAL FIELD

The present description generally relates to Optical Time-Domain Reflectometry (OTDR), and more particularly to coded-sequence OTDR.

### BACKGROUND

Optical Time-Domain Reflectometry (OTDR - also used to refer to the corresponding device) is widely employed for characterization of optical fiber links. OTDR is a diagnostic technique where a test signal comprising a light pulse is launched in an optical fiber link and returning light, arising from backscattering and reflections along the fiber link, is detected and analyzed. Various "events" along the fiber link can be detected and characterized through a proper analysis of the returning light in the time domain and insertion loss of the fiber link under test, as well as each component along the link, can be characterized.

A key factor to OTDR performance is the dynamic range. A high dynamic range can be achieved using high quality equipment (strong laser, low noise electronic) or by increasing the averaging time to reduce the noise. Of course, averaging implies longer acquisition time.

With the increasing use of OTDR for high-volume testing (such as, e.g., in the context of data centers), shorter acquisition time becomes essential, especially for web-scale data centers where the number of individual tests to be carried out is enormous.

OTDR acquisition time can be minimized by the use of a long pulse widths, which increase the level of backscattered signal received from the optical fiber link under test and thereby minimizes the required averaging time for a given dynamic range specification. However, longer pulses also mean a lower spatial resolution. Such acquisitions therefore tend to hide events that are too close from one another. In OTDR technology, this phenomenon is often referred to as event groups or merged events.

Another known solution for enhancing OTDR dynamic range is coded sequence OTDR technology. In conventional OTDR, the test signal comprises a single OTDR light pulse and light returning from the fiber link is detected before sending the next light pulse, whereas in coded sequence OTDR, the test signal comprises a coded sequence of light pulses. A reconstruction method, such as correlation or matrix manipulations (e.g., in the case of Simplex matrix technology), is then used to detect the sequence of pulses in the return light signal to retrieve an OTDR trace.

Coded-sequence OTDR technology was proposed in the 1980s (see K. Okada et al., "Optical cable fault location using correlation technique," Electron. Lett. 16(16), 629-630 (1980)). The first coded sequence OTDR systems used pseudorandom pulse sequences (see P. Healey "Optical orthogonal pulse compression codes hopping", Electron. Let. 10th Dec 1981 Vol.17 No. 25; and M. Zaboli et al., "High spatial resolution OTDR attenuation measurement by a correlation technique", Appl. Opt., vol. 22, pp. 3680, 1983) and were improved with complementary correlation codes (Golay codes) which are used to reduce side lobes (see P. Healey, "Complementary code sets for OTDR", Electron. Lett., vol. 25, pp. 692-693, 1989; M. Nazarathy et al., "Real-time long range complementary correlation optical time domain reflectometer," J. Lightwave Technol. 7(1), 24-38(1989); and F. Sischka et al., "Complementary Correlation Optical Time-Domain Reflectometry", Dec 1988 HEWLETT-PACKARD JOURNAL). Other coded-sequence OTDR technology includes the Simplex method (see Jones, "Using Simplex Codes to Improve OTDR Sensitivity." IEEE Photonics Technology Letters 5, no. 7 (July 1993): 822-24). Furthermore, Duckey Lee et al., in the article "Optimization of SNR improvement in the noncoherent OTDR based on simplex codes", Journal of Lightwave Technology, vol. 24, no. 1, 1 January 2006, pages 322-328, disclose a Simplex-code sequence OTDR method which optimizes the S/N ratio. In addition, Liao Ruolin et al., in the article "Harnessing oversampling in correlation-coded OTDR", Optics Express, vol. 27, no. 2, 18 January 2019, page 1693, compare the effect of oversampling on the Simplex-code and Golay-code methods.

But although many pulse coding techniques have been explored since then, no coded-sequence OTDR has had much commercial success. One reason is that the coded sequence tends to generate artefacts in the OTDR trace, especially in presence of a strong reflective event (see Hartog, "An introduction to distributed optical fiber sensors", CRC Press, p. 99). This is because pulse coding techniques assume that all pulses in the coded sequence have the exact same amplitude. In practice, OTDRs are not designed to send a series of pulses of equal intensity. A slow decay in the pulse amplitude is observed when successive pulses are sent at a short interval. Therefore, since the coding techniques are based on sequences where all pulses have the exact same amplitude, the OTDR trace rebuilt using CS-OTDR technologies contains artefacts.

There therefore remains a need for a coded-sequence OTDR characterization method which does not compromise the quality of the OTDR trace, so as to characterize individual events along the optical device under test.

### SUMMARY

There are therefore provided improved coded-sequence OTDR methods and devices which reduce artefacts by combining multiple coded sequence OTDR acquisitions performed with different inter-pulse intervals so as to change the positions of the artefacts in the OTDR traces.

More specifically, there are provided coded-sequence OTDR methods and devices which diminish or erase artefacts created in the OTDR trace by performing multiple coded-sequence OTDR acquisitions with mutually different inter-pulse intervals so as to change the positions of the artefacts in the OTDR traces derived from these OTDR acquisitions and combining the multiple OTDR traces to reconstruct a reconstructed OTDR trace. In some embodiments, the multiple acquisition signals may be combined by first applying a mask on each OTDR trace in signal processing to remove the artefacts and then reconstructing a trace by recombining masked versions of the signals.

Using different inter-pulse intervals changes the spacing between the artefacts in the OTDR traces. This results in multiple OTDR traces having artefacts at varying locations. The OTDR trace is then reconstructed by combining the multiple OTDR traces. The reconstructed OTDR trace may be generated by first masking the OTDR traces while considering the known positions of the artefacts in each acquisition signal.

The method applies to any coded-sequence OTDR method, including correlation OTDR methods that employ a correlation with the coded pulse signal to retrieve an OTDR result as well as other coded-sequence OTDR methods such as the Simplex method, which employ matrix manipulation to retrieve the OTDR result. More specifically, the sequence of pulses of the pulsed test signal may comprise a binary coded sequence of pulses (such as a pseudorandom pulse sequences or Golay-coded pulse sequences), or a periodic equidistant repeated pulse sequence, a chirped sequence of pulses or any other pulse coded sequence (examples of pulse coded sequences are described notably in US patent application 18/777,215 filed July 18, 2024).

It is noted that unless a special low side-lobe code sequence is used (such as in the Golay-code method), correlation coded OTDRs may suffer from correlation side lobes. This can be especially problematic when characterizing low-loss or low-reflectance events. The herein proposed method will therefore yield better quality OTDR traces when used with low side-lobe code sequences, although this should not be considered limitative.

In accordance with one aspect, there is provided a coded-sequence OTDR method for characterizing an optical device under test, the OTDR method comprising:
performing a plurality of coded-sequence OTDR acquisitions toward the optical device under test, wherein each OTDR acquisition is performed by propagating in the optical device under test, at least one pulsed test signal, each pulsed test signal comprising a series of light pulses in accordance with an inter-pulse interval and a known coded sequence and, for each pulsed test signal, detecting a return light signal from the optical device so as to obtain a corresponding acquisition signal;
wherein said plurality of coded-sequence OTDR acquisitions are performed with mutually different inter-pulse intervals of their corresponding pulsed test signal;
from each acquisition signal or intermediate signals derived from acquisition signals, generating an OTDR trace representing backscattered and reflected light as a function of distance in the optical device under test; and
combining the plurality of OTDR traces to obtain a reconstructed OTDR trace.

In accordance with another aspect, there is provided a coded-sequence OTDR device for characterizing an optical device under test, the OTDR device comprising:
an OTDR acquisition device connectable toward an end of the optical device for performing plurality of coded-sequence OTDR acquisitions toward the optical device, wherein each OTDR acquisition is performed by propagating in the optical device under test, at least one pulsed test signal, each pulsed test signal comprising a series of light pulses in accordance with a pulse rate and a known coded sequence and, for each pulsed test signal, detecting a return light signal from the optical device so as to obtain a corresponding acquisition signal; wherein said plurality of coded-sequence OTDR acquisitions are performed with mutually different inter-pulse intervals of their corresponding pulsed test signal; and
a processing unit receiving the acquisition signal and configured to perform the steps of:
   from each acquisition signal or intermediate signals derived from acquisition signals, generating an OTDR trace representing backscattered and reflected light as a function of distance in the optical device under test; and
   combining the plurality of OTDR traces to obtain a reconstructed OTDR trace.

In accordance with yet another aspect, there is provided a non-transitory computer-readable storage medium comprising instructions that, when executed, cause a processor to perform the steps of:
receiving data derived from at least one OTDR acquisition performed toward an optical device under test, wherein each OTDR acquisition is performed by propagating in the optical device under test, at least one pulsed test signal each pulsed test signal comprising a series of light pulses in accordance with a inter-pulse interval and a known coded sequence and, for each pulsed test signal, detecting a return light signal from the optical device so as to obtain a corresponding acquisition signal; wherein said plurality of coded-sequence OTDR acquisitions are performed with mutually different inter-pulse intervals of their corresponding pulsed test signal; and
from each acquisition signal or intermediate signals derived from acquisition signals, generating an OTDR trace representing backscattered and reflected light as a function of distance in the optical device under test; and
combining the plurality of OTDR traces to obtain a reconstructed OTDR trace.

A computer program comprising instructions that, when executed by a processor, cause the processor to perform a method comprising the steps of:
receiving data derived from at least one OTDR acquisition performed toward an optical device under test, wherein each OTDR acquisition is performed by propagating in the optical device under test, at least one pulsed test signal, each pulsed test signal comprising a series of light pulses in accordance with a inter-pulse interval and a known coded sequence and, for each pulsed test signal, detecting a return light signal from the optical device so as to obtain a corresponding acquisition signal; wherein said plurality of coded-sequence OTDR acquisitions are performed with mutually different inter-pulse intervals of their corresponding pulsed test signal; and
from each acquisition signal or intermediate signals derived from acquisition signals, generating an OTDR trace representing backscattered and reflected light as a function of distance in the optical device under test; and
combining the plurality of OTDR traces to obtain a reconstructed OTDR trace.

In some embodiments, the method or system may comprise one or more of the following features, considered alone or according to all technically possible combinations.

In some embodiments, a mask is applied to each OTDR trace to eliminate portions of the OTDR trace where artefacts are located; wherein said combining the plurality of OTDR traces combines the plurality of masked OTDR traces.

In some embodiments, wherein for each coded-sequence OTDR acquisitions, a mask function is generated according to the corresponding inter-pulse interval; and for each reflective event along the optical device under test, the mask function is centered on a point corresponding to the reflective event in the OTDR trace to eliminate portions of the OTDR trace where artefacts are located and combining centered mask functions to generate said mask.

In some embodiments, said combining comprises, for each point along the reconstructed OTDR trace, averaging the un-masked OTDR traces.

In some embodiments, the pulsed test signal comprises a binary coded pulse train and the known coded sequence comprises a binary coded sequence.

In some embodiments, said at least one pulsed test signal comprises a set of pairs of pulsed test signals comprising a first pair of pulsed test signals coded according to a first coded sequence and a second pair of pulsed test signals coded according to a second coded sequence such that the set of pairs of coded sequences represent complementary bipolar correlation code sequences; and pulsed test signals of each pair of pulsed test signals represent the unipolar versions of its corresponding bipolar correlation code sequence; and whereby at least two pairs of acquisition signals (SOTDRA+S, SOTDRA-S, SOTDRB+S, SOTDRB-S) are obtained.

In some embodiments, the acquisition signals of said first pair are subtracted from one another to obtain a first intermediate signals (SOTDRAS) and the acquisition signals of said second pair are subtracted to obtain a second intermediate signals (SOTDRBS); and for each of first and second intermediate signals, a correlation is calculated between the corresponding intermediate signal and a coded sequence signal representative of the corresponding known coded sequence, and adding the correlations to one another to obtain the corresponding OTDR trace.

In some embodiments, said set of pairs of coded sequence of pulses represent Golay-coded sequences of pulses.

In some embodiments, said known sequence of pulses represents a Simplex sequence of pulses.

In some embodiments, said known sequence of pulses comprises a chirped sequence of pulses.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application. In particular, the term "about" generally refers to a range of numbers that one skilled in the art would consider equivalent to the stated value (e.g., having the same or an equivalent function or result). In some instances, the term "about" may mean a variation of ±10% of the stated value. It is noted that all numeric values used herein are assumed to be modified by the term "about", and that all conditions, relationships or characteristics used herein are assumed to be modified by the term "substantially", unless stated otherwise. The term "between" is used herein to refer to a range of numbers or values defined by endpoints is intended to include both endpoints, unless stated otherwise.

In the present description, and unless stated otherwise, the terms "connected", "coupled" and variants and derivatives thereof refer to any connection or coupling, either direct or indirect, between two or more elements. The connection or coupling between the elements may be mechanical, physical, operational, electrical or a combination thereof.

Further features and advantages of the present invention will become apparent to those of ordinary skill in the art upon reading the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combined with other features from one or more other exemplary embodiments.

### BRIEF DESCRIPTION OF THE DRAWINGS

Fig. 1 is a graph illustrating an OTDR pulsed test signal comprising a series of pulses having uneven amplitudes.
Fig. 2A is a graph illustrating an example of an OTDR trace obtained from conventional OTDR measurement. Fig. 2B is a graph illustrating an example of an OTDR trace obtained from coded-sequence OTDR measurement where the amplitude of the pulses in the pulsed test signal is unequal.
Fig. 3 comprises Fig. 3A, Fig. 3B, Fig. 3C, Fig. 3D and Fig. 3E, wherein Figs. 3A and 3B illustrate an example of a Golay Complementary code set of length 32, Figs. 3C and 3D illustrate autocorrelations obtained with the Golay Complementary code set of Figs. 3A and 3B and Fig. 3E illustrates an OTDR trace reconstructed from the autocorrelations of Figs. 3C and 3D.
Fig. 4 is a block diagram illustrating how a set of Golay sequences A and B are transformed in unipolar codes, in accordance with one embodiment.
Fig. 5 is a block diagram illustrating how return light signals corresponding to the unipolar codes of Fig. 4 are processed to generate the reconstructed OTDR trace in accordance with the Golay method, in accordance with one embodiment.
Fig. 6 comprises Fig. 6A, Fig. 6B, Fig. 6C and Fig. 6D which are graphs showing examples of OTDR traces illustrating the process of Fig. 5, wherein Fig. 6A shows acquired signals S_{OTDR} A_{+S} and S_{OTDR} A_{-S}; Fig. 6B shows acquired signals S_{OTDR} B_{+S} and S_{OTDR} B_{-S}; Fig. 6C shows correlated traces (S_{OTDR} As * SAs) and (S_{OTDR} Bs * SBs); and Fig. 6D shows a reconstructed OTDR trace.
Fig. 7 comprises Fig. 7A, Fig. 7B, Fig. 7C, Fig. 7D and Fig. 7E which are graphs illustrating simulation pulsed test signals that suffer from uneven amplitude, wherein Figs. 7A and 7B show pulsed test signals SA₊ and SA- coded according to Golay coded sequence A; Figs. 7C and 7D show pulsed test signals SB₊ and SB- coded according to Golay coded sequence B; and Fig. 7E shows the resulting autocorrelation obtained from the simulation pulsed test signals of Figs. 7A, 7B. 7C and 7D.
Fig. 8 is a graph showing a close-up on the graph of Fig. 7A. Fig. 8B is a graph showing a close-up on the graph of Fig. 7E.
Fig. 9 is a flow chart illustrating a CS-OTDR method for diminishing or removing artefacts generated by a reflective event due to the uneven amplitude of pulses in the pulsed test signals, in accordance with one embodiment.
Figs. 10A, Fig. 10B and Fig. 10C are graphs showing Golay autocorrelations obtained for three different inter-pulse intervals Pi corresponding to 5, 12 and 19 samples, respectively, in accordance with one embodiment. Fig. 10D is a graph illustrating a combination of the autocorrelations of Figs. 10A, 10B and 10C.
Fig. 11 comprises Figs. 11A, Fig. 11B, Fig. 11C and Fig. 11D. Figs. 11A, Fig. 11B and Fig. 11C are graphs showing OTDR traces as obtained for three different inter-pulse intervals corresponding to inter-pulse intervals of 350 ns, 450 ns and 550 ns, respectively, in accordance with one embodiment. Fig. 11D is a graph illustrating the OTDR trace reconstructed from the OTDR traces of Figs. 11A, Fig. 11B and Fig. 11C.
Fig. 12 is a graph illustrating a weight function obtained for the OTDR traces of Figs. 11A, Fig. 11B and Fig. 11C, in accordance with one embodiment.
Fig. 13 is a flow chart illustrating a CS-OTDR method embodying an exemplary implementation of the artefact correction method, in accordance with one embodiment.
Figs. 14A and Fig. 14B are graphs illustrating examples of mask functions for eliminating artefacts, where Fig. 14A illustrates an inter-pulse interval Pi of 3 and Fig. 14B an inter-pulse interval Pi of 4.
Fig. 15 is a block diagram illustrating an example architecture of a CS-OTDR device comprising a CS-OTDR acquisition device, in accordance with one embodiment.
Fig. 16 is a block diagram illustrating an example architecture of an OTDR acquisition device of the OTDR device of Fig. 15, in accordance with one embodiment.

It will be noted that throughout the drawings, like features are identified by like reference numerals. In the following description, similar features in the drawings have been given similar reference numerals and, to not unduly encumber the figures, some elements may not be indicated on some figures if they were already identified in a preceding figure. It should be understood herein that elements of the drawings are not necessarily depicted to scale, since emphasis is placed upon clearly illustrating the elements and structures of the present embodiments. Some mechanical or other physical components may also be omitted in order to not encumber the figures.

Furthermore, throughout the drawings, and especially in block diagrams and flowcharts, dash lines are generally used to indicate that a component is intended to be optional.

### DETAILED DESCRIPTION

OTDR is a diagnostic technique for optical fiber links where a test signal in the form of light pulses is launched in the optical fiber link under test and the return light signal, arising from backscattering and reflections along the link, is detected. Herein, the process of launching a test signal and acquiring the return light signal to obtain therefrom an OTDR trace is referred to as an "OTDR acquisition". The acquired power level of the return light signal as a function of time is referred to as an "OTDR trace" or a "reflectometric trace", where the time scale is representative of distance between the OTDR acquisition device and a point along the fiber link.

One skilled in the art will readily understand that in the context of OTDR methods and systems, each light acquisition generally involves propagating a large number of substantially identical light pulses in the optical fiber link and averaging the results. In this case, the result obtained from averaging will herein be referred to as an OTDR trace. It will also be understood that other factors may need to be controlled during the light acquisitions or from one light acquisition to the next, such as gain settings, pulse width, pulse power, etc. as is well known to those skilled in the art.

"Backscattering" refers to Rayleigh scattering occurring from the interaction of the travelling light with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" may be generated by any perturbation along the fiber link which affects the returning light. Typically, an event may be generated by an optical fiber splice along the fiber link, which is characterized by a localized loss with little or no reflection. Mating connectors can also generate events that typically present reflectance, although these may be impossible to detect in some instances. OTDR methods and systems may also provide for the identification of events such as a fiber breakage, characterized by substantial localized loss and, frequently, a concomitant reflection peak, as well as loss resulting from a bend in the fiber. Finally, any other component along the fiber link may also be manifest as an "event" generating localized loss.

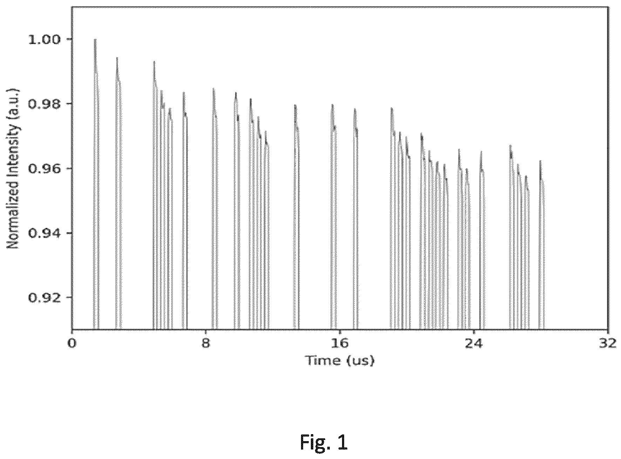

Now referring to Fig. 1, in conventional OTDR, the test signal comprises a single OTDR light pulse and light returning from the fiber link is detected before sending the next light pulse. Now in coded-sequence OTDR (CS-OTDR) technology, the test signal comprises one or more coded sequences of light pulses, such as, e.g., Golay sequences. In the case of Golay sequences and other correlation-based CS-OTDR methods, a correlation method is then used to detect the sequence of pulses in the return light signal, i.e., the acquired OTDR return light is correlated with the coded pulse signal by correlating the acquired OTDR return light with the coded pulse signal to retrieve an OTDR trace. In the case of the Simplex method, matrix manipulation is used to detect the sequence of pulses in the return light signal. In theory, pulse coding techniques assume that all pulses in the pulsed test signal have the exact same amplitude. However, in practice, OTDRs are not designed to send a series of pulses of equal intensity. A slow decay in the pulse amplitude is observed when successive pulses are sent at a short interval.

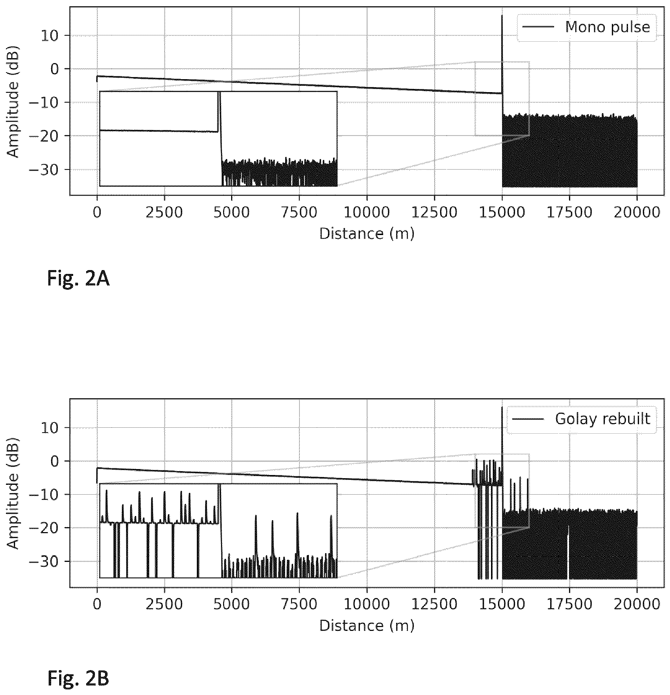

Fig. 2A shows an OTDR trace obtained from conventional OTDR measurement, i.e., a single pulse at a time, whereas Fig. 2B shows an OTDR trace obtained from a CS-OTDR measurement where the amplitude of the pulses in the pulsed test signal is inevitably unequal (as shown in Fig. 1). In Fig. 2B, since coding techniques are based on sequences where all pulses have the exact same amplitude, in practice, when unequal pulses are used, OTDR traces obtained from such acquisitions contain artefacts. As can be observed in Fig. 2B, artefacts are specifically created in the vicinity of strong reflective events, here at the end of the fiber under test.

### Golay Method

The herein-proposed method is applicable to any coded-sequence OTDR methods. More specifically, the sequence of pulses of the pulsed test signal may comprise a binary coded sequence of pulses (such as a pseudorandom pulse sequences or Golay-coded pulse sequences), or a periodic equidistant repeated pulse sequence, a chirped sequence of pulses or any other pulse coded sequence. However, the Golay method was found to be very effective thanks to its short pulse sequences and its side lobe suppression. The present invention is therefore described and illustrated in the context of the Golay method, although it will be understood that it may be extended to other coded-sequence OTDR methods including pseudorandom pulse sequence methods and the Simplex method (see above).

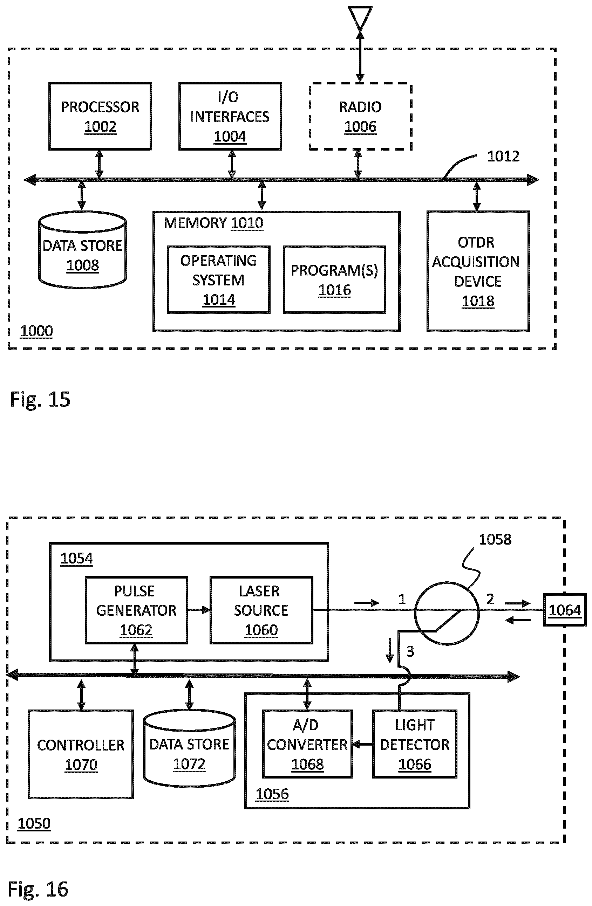

The Golay method employs complementary correlation codes (a Golay pair) to eliminate autocorrelation sidelobes. The technique can be implemented using conventional OTDR hardware, with simple modifications (see Figs. 15 and 16 described hereinbelow).

It is noted that the present description focuses on applying the proposed improvement to the Golay method. More thorough descriptions of the implementation of the Golay method can be found in the literature (see M. Nazarathy, S. A. Newton, R. P. Giffard, D. S. Moberly, F. Sischka, W. R. Trutna, and S. Foster, "Real-time long range complementary correlation optical time domain reflectometer," J. Lightwave Technol. 7(1), 24-38(1989) and F. Sischka, M. Nazarathy, S. A. Newton,"Complementary Correlation Optical Time-Domain Reflectometry", Dec 1988, HEWLETT-PACKARD JOURNAL) and will therefore not be described herein.

According to the Golay method, instead of having only one sequence, the correlations secondary peaks can be eliminated using complementary correlation coded Golay sequences. A complementary correlation code set is defined as a set of two sequences (also refered to as codewords), for example A and B, each L bit long. They are said to be complementary if the sum of the autocorrelations of all the codewords is zero for all nonzero shifts, i.e.: $2 Lδ = A ∗ A + B ∗ B = 0$ (1)

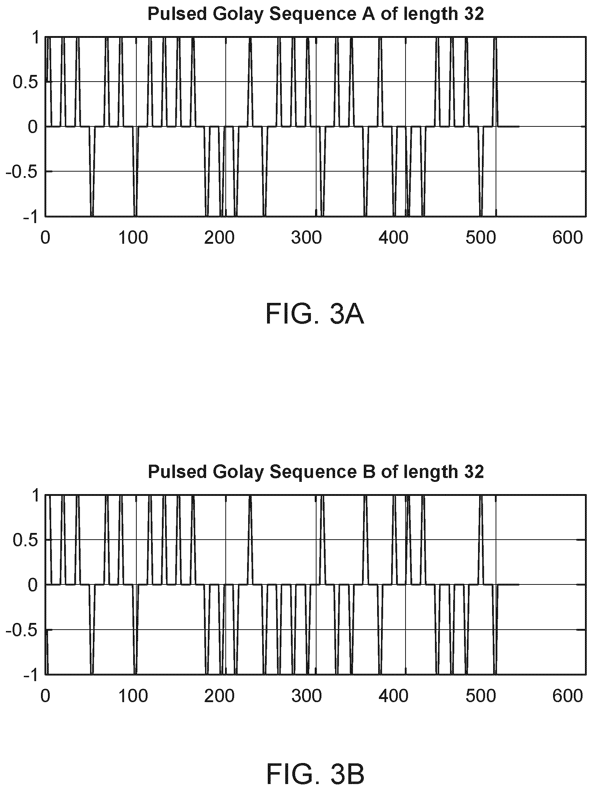

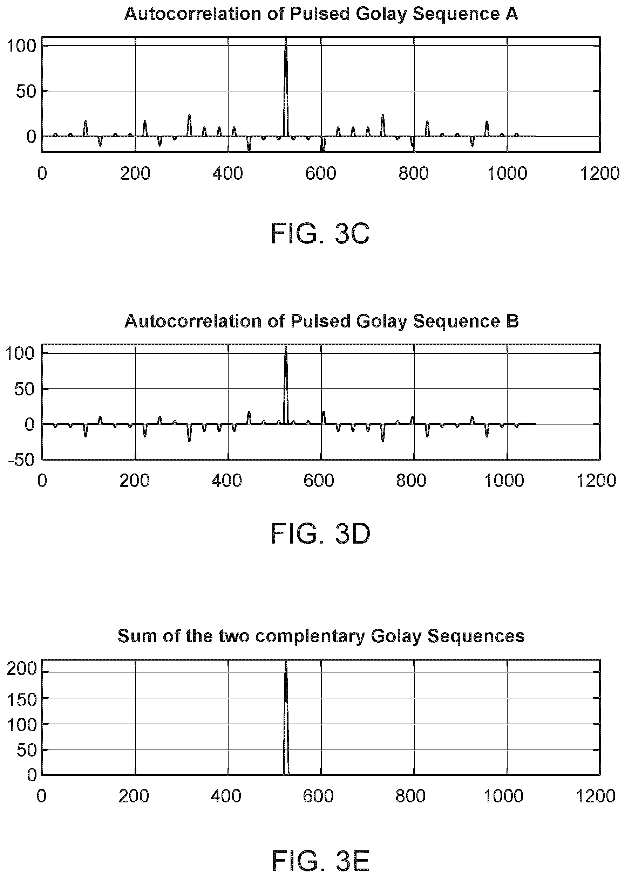

A pulsed version of a Golay complementary code set of length 32 is shown in Figs. 3A and 3B and the resulting autocorrelations are shown in Figs. 3C, 3D and 3E.

Since OTDR is a unipolar device (power is always positive), the Golay bipolar sequences A and B may be transformed in four unipolar sequences as follows: ${A}_{+} = \frac{1 + A}{2} , {A}_{-} = \frac{1 - A}{2} , {B}_{+} = \frac{1 + B}{2} , B _ = \frac{1 - B}{2}$ (2) wherein the pair of sequences A₊ and A- are the unipolar versions coded according to the bipolar coded sequence A and the pair of sequences B₊ and B₋ are the unipolar versions coded according to the bipolar coded sequence B.

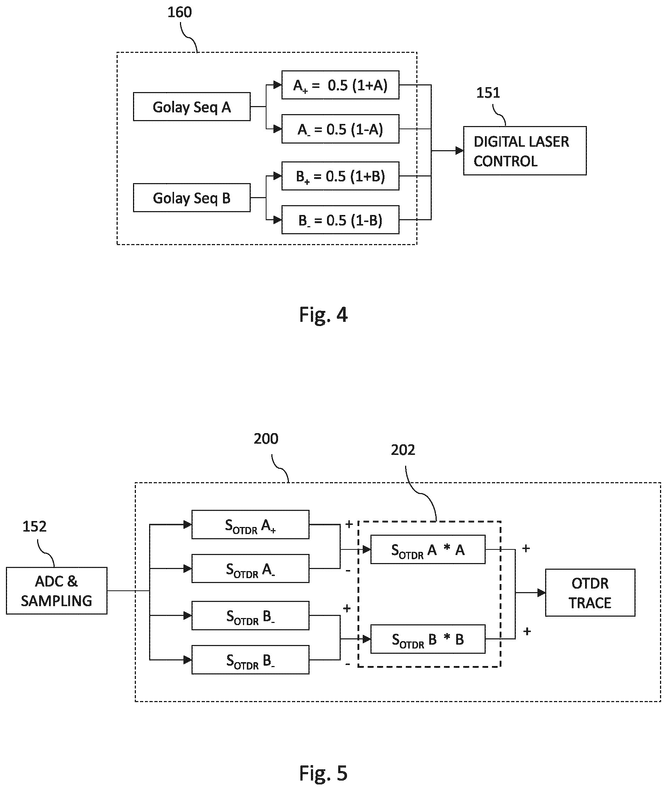

As illustrated in Fig. 4, the set of Golay sequences A and B are transformed in unipolar codes A₊, A-, B₊, B₋ that are each sequentially emitted by the laser 110, which is digitally controlled to generate the unipolar codes, and the pulsed light sequences are injected into to the DUT 120.

In other words, a set of pairs of pulsed test signals are launched in the optical device under test. The set of pairs comprises a first pair of pulsed test signals SA₊ and SA- coded according to a first coded sequence of pulses A and a second pair of pulsed test signals SB₊ and SB- coded according to a second coded sequence of pulses B such that the set of pairs of coded sequence of pulses represent complementary bipolar correlation code sequences A and B. The pulsed test signals of each pair represent the unipolar versions, e.g., SA₊ and SA-, of its corresponding bipolar correlation code sequence, e.g., A.

As illustrated in Fig. 5, the return light signals corresponding to each of these signals (S_{OTDR} A_{+S}, S_{OTDR} A_{-S}, S_{OTDR} B_{+S}, S_{OTDR} B_{-S}) are sequentially acquired by the acquisition system 150 and are processed as shown in 200. S_{OTDR} A_{+S} and S_{OTDR} A-s are subtracted from one another to provide the intermediate signal S_{OTDR} As. S_{OTDR} As is then correlated to the transmitted sequence SAs. Similarly, S_{OTDR} B_{+S} and S_{OTDR} B_{-S} are subtracted to provide the intermediate signal S_{OTDR} Bs. S_{OTDR} Bs is then correlated to the transmitted sequence SBs. The results are summed to provide the reconstructed OTDR trace.

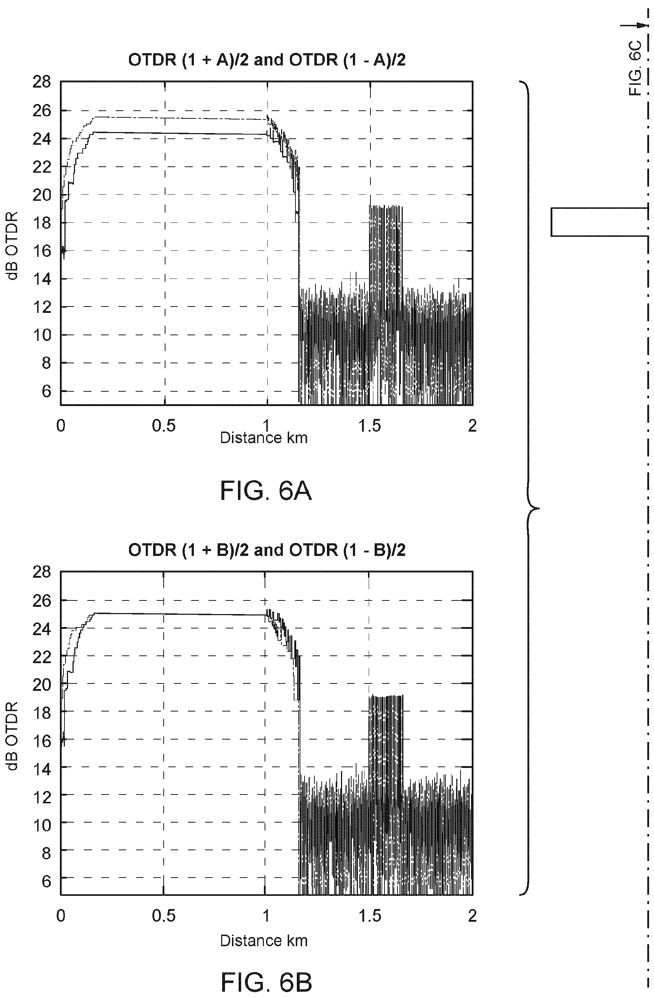

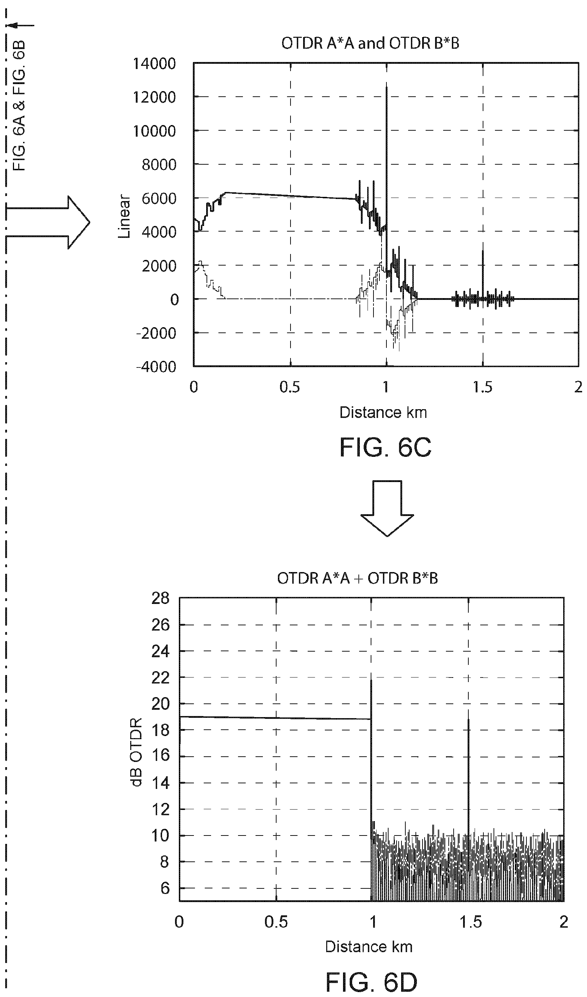

Fig. 6 shows an example of OTDR traces illustrating the complete process. S_{OTDR} A_{+S} and S_{OTDR} A_{-S} are shown in Fig. 6A and S_{OTDR} B_{+S} and S_{OTDR} B_{-S} are shown in Fig. 6B. The correlated traces (S_{OTDR} As * SAs) and (S_{OTDR} Bs * SBs) are shown in Fig. 6C and the reconstructed OTDR trace in Fig. 6D.

Note that the symbol "*" represents the correlation operation and the subscript "S" indicates that this is a discrete-time sampled signal. It is noted that throughout this text, when referring to the correlation operation to retrieve the OTDR trace, the correlation operation may involve a cross-correlation between two signals. The correlation step is illustrated by step 200 in Fig. 5.

Illustrated in Figs. 3 and 6 is a simulation obtained from a theoritical case which assumes that all pulses in the coded sequence have the exact same amplitude. But as explained hereinabove, in practice, OTDRs are not designed to send a series of pulses of equal intensity. A slow decay in the pulse amplitude is observed when successive pulses are sent at a short interval (see Fig. 1).

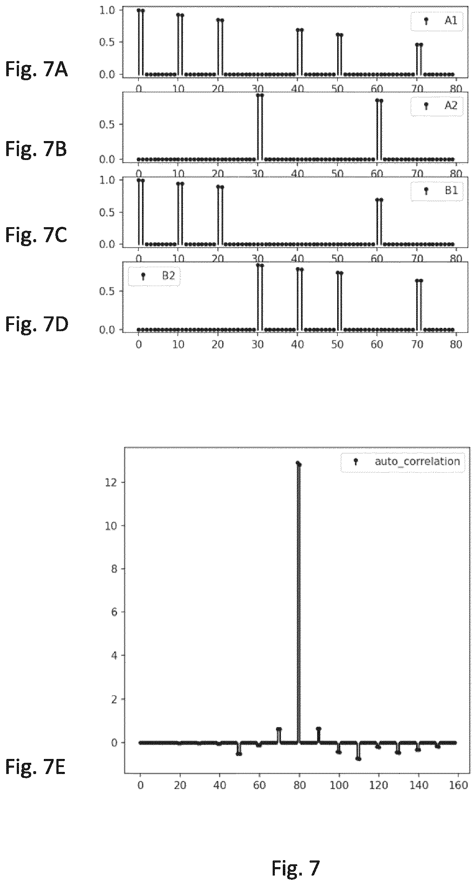

Figs. 7A, 7B. 7C and 7D illustrate simulation pulsed test signals that suffer from uneven amplitude. Figs. 7A and 7B show pulsed test signals SA₊ and SA- coded according to Golay coded sequence A and Figs. 7C and 7D show pulsed test signals SB₊ and SB- coded according to Golay coded sequence B. Illustrated are sampled versions of such pulsed test signals wherein the sampling rate is such that each pulse width covers two samples (for example, the pulse width may be 50 ns, while the sampling rate is 25 ns).

Fig. 7E shows the resulting autocorrelation obtained from the simulation pulsed test signals of Figs. 7A, 7B. 7C and 7D. Fig. 7E corresponds to the sum of the two complementary Golay code sequences. Fig. 7E is therefore the equivalent of Fig. 3E but as obtained from pulsed test signals having uneven amplitudes. As can be seen in Fig. 7E, the resulting autocorrelation exhibits artefacts on both sides of the correlation peak, which are due to the uneven amplitude of the pulsed test signals.

In a conventional (single pulse) OTDR, the measured OTDR trace may be represented by the convolution of the impulse response of the optical fiber link under test with the OTDR test signal pulse. In a CS-OTDR based on complementary correlation code sets, the OTDR trace may be represented by a convolution of the impulse response of the optical fiber link under test with the autocorrelation function (kernel). So, if the autocorrelation function exhibit artefacts, like those of Fig. 7E, artefacts inevitably appear in the resulting OTDR trace.

Accordingly, as exemplified in Fig. 2B, an OTDR trace obtained from pulsed test signals having uneven amplitudes will exhibit such artefacts, which are particularly apparent on both sides of any reflectance peak, and more particularly for strong reflective events.

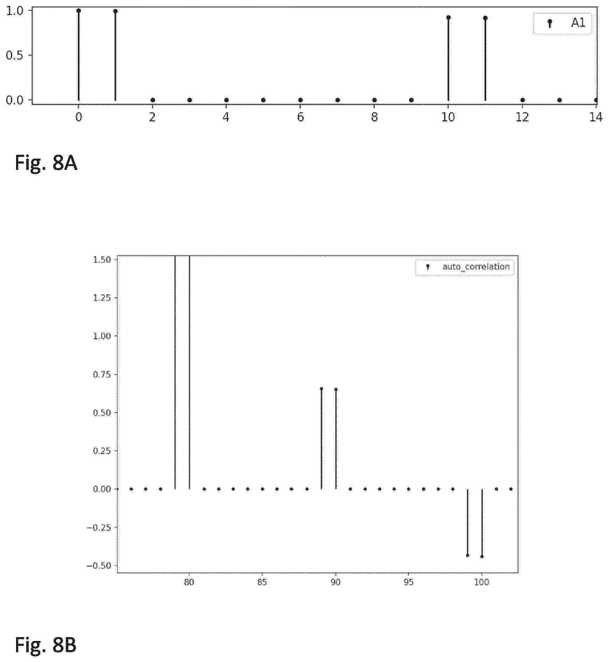

Fig. 8A is a close-up on the graph of Fig. 7A. It is noted that in this example, each pulse of the pulsed test signal has a width that corresponds to two sample points (for example, the pulse width Pw may be 50 ns, while the sampling rate SR is 25 ns). The inter-pulse interval Pi (which is inversely proportional to the pulse rate Pr) corresponds to 10 sample points (e.g., Pi = 10 x SR = 250 ns) and the coded sequence has a length Lcs of 8 codes.

Fig. 8B is a close-up on the graph of Fig. 7E. The autocorrelation peak is centered around sample x = 80. It was found that the spacing AS between artefacts in the resulting autocorrelation corresponds to the inter-pulse interval Pi (AS = Pi).

It is found that the positions of the artefacts in the OTDR trace is deterministic and corresponds to the pulse repetition rate PR. Positions of the artefacts are therefore known from the acquisition conditions. Furthermore, the maximum width of each artifact can be predicted based on the acquisition conditions and corresponds to the pulse width including its rise and fall time. Therefore, as will be explained hereinbelow, these properties of the artefacts can be leveraged to somehow diminish or even erase them from the OTDR trace.

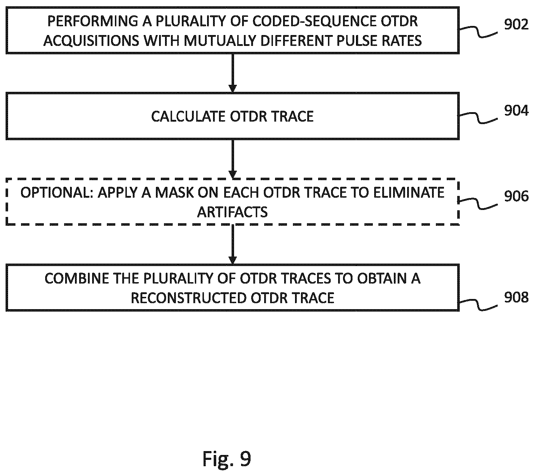

Referring to Fig. 9, an improved CS-OTDR method is now described which allows to diminish or remove artefacts generated by a reflective event due to the uneven amplitude of pulses in the pulsed test signals. In short, multiple coded sequence OTDR acquisitions are performed with different pulse rates (Pr1, Pr2, Pr3,...) / inter-pulse intervals (Pi1, Pi2, Pi3,...) so as to change the spacing between the artefacts in the resulting multiple OTDR traces.

This results in multiple OTDR traces with similar artefacts but at varying locations along the trace. We can then reconstruct an OTDR trace by selectively recombining the OTDR traces while considering the known positions of the artefacts. can be selected so that the artefacts generated in the multiple OTDR traces do overlap.

More specifically, in step 902, a plurality of coded-sequence OTDR acquisitions are performed toward the optical device under test, wherein the plurality of coded-sequence OTDR acquisitions are performed with mutually different pulse rates (Pr1, Pr2, Pr3,...) / inter-pulse intervals (e.g. Pi1, Pi2, Pi3).

As known in the art, each OTDR acquisition is performed by propagating in the optical device under test, at least one pulsed test signal. Each pulsed test signal comprises a plurality of light pulses in accordance with a inter-pulse interval Pi and a known coded sequence. For each pulsed test signal, a return light signal from the optical device is detected so as to obtain a corresponding acquisition signal.

As explained hereinabove, in some embodiments, the pulsed test signal may comprise a binary coded pulse train (such as a pseudorandom pulse sequences or Golay-coded pulse sequences) and the known coded sequence then comprises a binary coded sequence. In other embodiments, the pulsed test signal may comprise a periodic equidistant repeated pulse sequence, a chirped sequence of pulses or any other pulse coded sequence (examples of pulse coded sequences are described notably in US patent application 18/777,215 filed July 18, 2024).

As illustrated in Figs. 4 and 5, in the case of complementary correlation code sets (such as a Golay pair), the at least one pulsed test signal comprises a set of pairs of pulsed test signals comprising a first pair of pulsed test signals (e.g., A₊ and A-) coded according to a first coded sequence (e.g. sequence A) and a second pair of pulsed test signals (e.g., B₊ and B₋) coded according to a second coded sequence (e.g. sequence B) such that the set of pairs of coded sequences represent complementary bipolar correlation code sequences (e.g., sequences A and B). Pulsed test signals of each pair of pulsed test signals represent the unipolar versions (e.g., A₊ / A- and B₊ / B₋) of its corresponding bipolar correlation code sequence. Two pairs of acquisition signals (e.g., SOTDRA+S, SOTDRA-S, SOTDRB+S, SOTDRB-S) are then obtained. The acquisition signals of the first pair are subtracted from one another to obtain a first intermediate signals (SOTDRAS) and the acquisition signals of the second pair are subtracted from one another to obtain a second intermediate signals (SOTDRBS).

In step 904, as explained hereinabove with reference to Fig. 5, for each acquisition signal or, in the case of complementary correlation code sets, for each intermediate signal derived from acquisition signals, a correlation is calculated between the corresponding acquisition signal or intermediate signal and a coded-sequence signal representative of the corresponding known coded sequence. In more conventional CS-OTDR acquisitions, the trace resulting from this process would directly yield the OTDR trace, which represents backscattered and reflected light as a function of distance in the optical device under test. However, in the herein improved method, these traces will be further processed to generate the final reconstructed OTDR trace. These traces will be referred to herein as "OTDR traces" whereas the combination of the OTDR trace will be referred to herein as the "reconstructed OTDR trace".

In the case of Golay complementary correlation code sets, a correlation is calculated for each of intermediate signals (SOTDRAS, SOTDRBS) and the correlations are added to one another to obtain the OTDR traces.

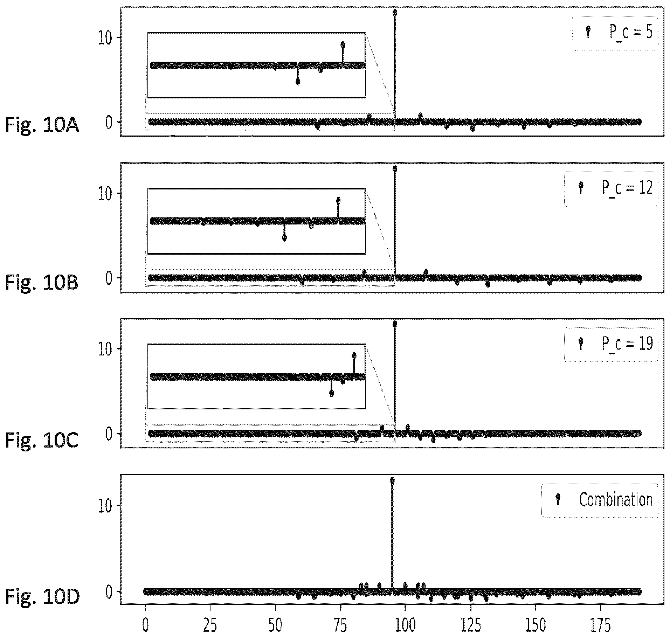

Figs. 10A, 10B and 10C illustrate Golay autocorrelations obtained for three different inter-pulse intervals Pi, i.e., corresponding to 5, 12 and 19 samples, respectively. As shown, each autocorrelation exhibits artefacts, but the artefacts are at different locations on both sides of the correlation peak, depending on the inter-pulse interval Pi. Fig. 10D illustrates a combination of the autocorrelations which represents artefacts that would be obtained by simply adding the three OTDR traces obtained with different inter-pulse intervals (Pi1, Pi2, Pi3,...). It is noted that such combination is already an improvement compared to employing a single inter-pulse interval Pi because the amplitude of each artefact is reduced relative to the correlation peak. If the pulse rates are selected so that none of the artefacts overlap, the amplitude will be reduced proportionally to the number of pulse rates.

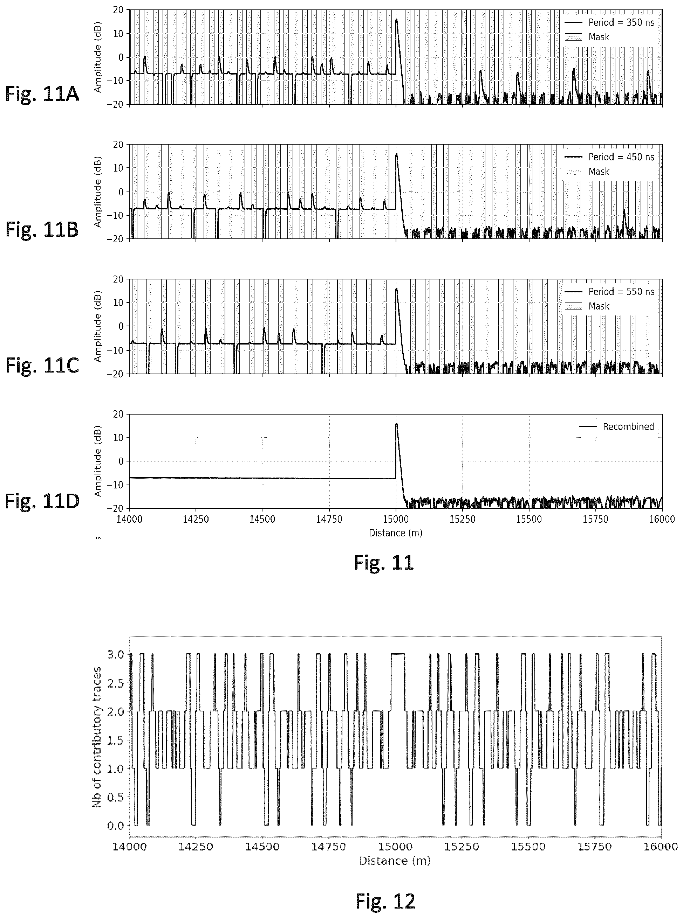

Figs. 11A, 11B and 11C now illustrate step 906 which is optional. Figs. 11A, 11B and 11C shows OTDR traces as obtained for three different inter-pulse intervals, i.e., corresponding to inter-pulse intervals of 350 ns, 450 ns and 550 ns, respectively. The OTDR trace exhibits artefacts at predictable positions which are every 35m, 45m and 55m apart from the reflectance peak. The inter-pulse intervals are selected so that artefacts appear at different locations in the three OTDR traces in way that they do not overlap. Accordingly, for every sample, at least one of the OTDR traces can be used because it do not exhibit an artefact.

Then, in optional step 906, a mask is applied to each OTDR trace in order to eliminate portions of the OTDR trace where artefacts are located. The masks are illustrated by the grey zones in Figs. 11A, 11B and 11C. Samples located in the predictable locations of the artefacts may simply be set to zero.

In step 908, the OTDR traces obtained for different pulse rates / inter-pulse intervals are then combined to reconstruct an OTDR trace.

In some embodiments, the reconstructed OTDR trace may be generated from the OTDR traces by, for each point along the reconstructed OTDR trace, discarding the OTDR trace(s) where artefacts are predicted, and averaging the remaining OTDR traces.

If a mask is used as per step 906, the masked versions of the OTDR traces are combined. In short, for each point along the trace, the combination may be made by averaging the un-masked OTDR traces among the OTDR traces. Fig. 11D illustrates the OTDR trace reconstructed from the OTDR traces of Figs. 11A, 11B and 11C. More specifically, for each point in distance along the reconstructed OTDR trace, either one, two or all three OTDR traces are averaged by discarding the masked points in each OTDR traces and averaging the remaining points. More details on ways to recombine the masked OTDR traces are provided herein below.

In other embodiments where step 906 is omitted, all OTDR traces may simply be averaged. Such combination reduces the amplitude of the artefacts in the reconstructed OTDR trace without eliminating them but is still an improvement compared to employing a single inter-pulse interval Pi.

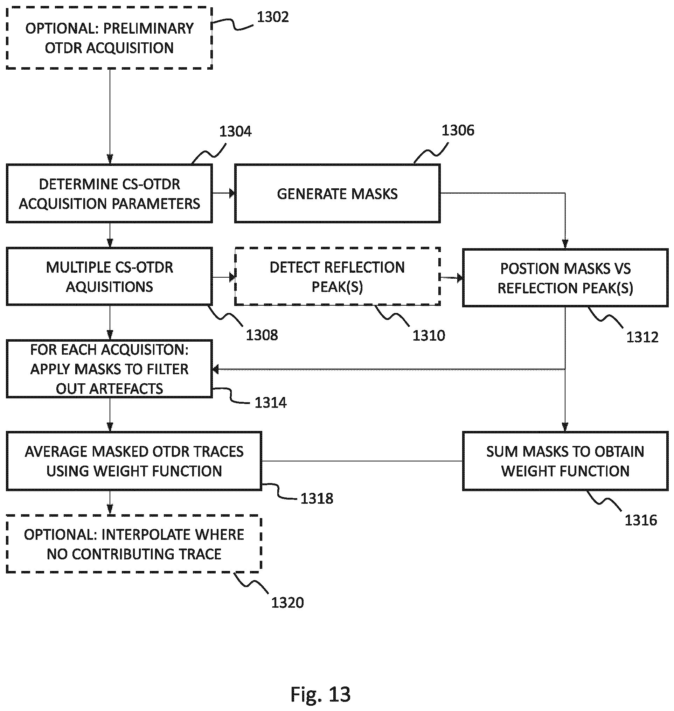

Referring to Fig. 13, an exemplary implementation of the artefact correction method is described including more implementation details.

In step 1302 which is optional, a first conventional OTDR acquisition is performed to locate reflective events that are susceptible of generating artefacts in a CS-OTDR measurement.

For example, such OTDR acquisition may use a large pulse width, and a small averaging time to locate strong reflective events along the link. Many known peak finder algorithms can be used for reflectance peak detection such as, for example, a sliding window or an algorithm based on a threshold value. If no reflective event is found, a conventional Golay method may be used with a single inter-pulse interval Pi because no artefact is expected. Otherwise, the artefact correction method is applied as described in steps 1304, 1306, 1308, 1310, 1312, 1314, 1316, 1318 described herein. Step 1302 is optional because, in some cases, the presence of strong reflections may be suspected, and the artefact correction method be used by default.

In step 1304, the CS-OTDR acquisition parameters are selected, including the inter-pulse intervals to be used. For example, the pulse width Pw may be selected based on a desired resolution. The coded sequence length may be chosen based on the desired dynamic range. Finally, a combination of different inter-pulse intervals may be selected as a function of the coded sequence length, among other parameters. Factors to be considered in the selection of the inter-pulse intervals (e.g., Pi1, Pi2, Pi3) are described hereinbelow.

In step 1306, a mask function is generated for each inter-pulse interval Pi for which a CS-OTDR acquisition is to be performed. The mask function is used to discard points where artefacts are expected in an OTDR trace based on the predictable positions. It indicates the predictable locations of the artefacts in the autocorrelation obtained for a given inter-pulse interval Pi and sequence length Lcs. The mask function depends on the inter-pulse intervals Pi, the peak width Ptw and the sequence length Lcs. The mask function is described in more detail hereinbelow. For example, the mask function may be represented by binary values where the value is one for positions not to be masked and zero for positions to be masked.

In step 1308, a plurality of coded-sequence OTDR acquisitions are performed toward the optical device under test, according to the inter-pulse intervals (e.g., Pi1, Pi2, Pi3) selected in step 1302 to obtain a corresponding plurality of OTDR traces.

In step 1310, if no preliminary OTDR acquisition was made in step 1302 to locate the reflective events, the CS-OTDR acquisitions of step 1308 are used to locate the reflective events that may cause artefacts. The same method that would be applied for the conventional OTDR acquisition of step 1302 to locate reflective events may be used equivalently in step 1310 as applied to the CS-OTDR acquisitions of step 1308.

The level of reflectance of events that are susceptible to creating artefacts depends on the acquisition conditions and more particularly on the level of variability of the pulse amplitudes in the pulsed test signals. The more uneven the pulses are, the smaller will be a reflectance level that creates artefacts. Once reflective events are located, the ones that are likely to cause artefacts and on which the correction method will be applied can be selected. For example, this can be achieved using a reflectance threshold which can be established empirically based on a knowledge of the actual pulsed test signal being generated in practice.

In step 1312, a mask is generated for each OTDR trace, which will later be used to eliminate portions of the OTDR trace where artefacts are located. Each mask indicates the points along the OTDR trace where artefacts are predicted. At each of these points, the value of the mask is set to zero, the value being otherwise set to one. The mask is generated by, for each reflective event found in step 1302 or 1310, centering the mask function on the point corresponding to the reflective peak in the OTDR trace. The mask function is applied for each reflective event located in the OTDR traces to obtain the mask. Examples of such masks are illustrated by the grey zones in Figs. 11A, 11B and 11C.

In step 1314, each OTDR trace is processed by applying its corresponding mask to filter out portions of the OTDR trace where artefacts are located.

It will be understood that the masked OTDR traces each contain masked points where the value is set to zero. Thus, the OTDR traces cannot be simply added to one another. Therefore, for each point along the trace, the number of OTDR traces that are not masked needs to be taken into account. In order to make the calculation simple, a weight function may be calculated.

In step 1316, a weight function is generated by adding together the masks obtained in step 1312. This weight function is used to ensure that the averaging in each point in the reconstructed OTDR trace accounts for the number of contributing OTDR traces. The weight function therefore indicates, for each point, the number of contributing OTDR traces (i.e. the number of corrections traces that are not masked at this specific point). An example of such weight function corresponding to the example of Fig. 11 is illustrated in Fig. 12.

In step 1318, the masked OTDR traces are averaged by adding together all the masked OTDR traces and dividing the result by the weight function.

It is noted that, in some cases, there may be points where there are no OTDR traces to contribute, i.e., all OTDR traces are masked because there is an artefact at this position in all OTDR traces. In such a case, the weight function obtained in step 1316 would yield zero at these points and applying the weight function in step 1318 would result in a division by zero, i.e., undefined. In such cases, interpolation may be used as per step 1320.

In step 1320, which is optional, points along the result of step 1318 where there is no contributing OTDR trace may be populated by interpolation. A simple interpolation from the neighboring points may be done to estimate the value at such point.

### Mask function

It can be demonstrated that for a code sequence of length Lcs and an inter-pulse interval Pi, a highly reflective event starting at the sample point n = n0 for a peak width of Ptw, the OTDR trace will exhibit artefacts for all values n obeying the following formula: $\left(\left|n-n0\right|% Pi\leq Ptw\right) ∧ \left(\left|n-n0\right|\leq \left(Lcs-1\right)∗Pi\right)$ (3) where % stands for a modulo division and A stands for 'and', | | stands for the absolute value, and where Pi and Ptw are expressed in number of sample points.

It is noted that Ptw corresponds to the width Ptw of the reflective peak, including the rise time, the pulse width Pw and the fall time: $Ptw = Prise + Pw + Pfall$

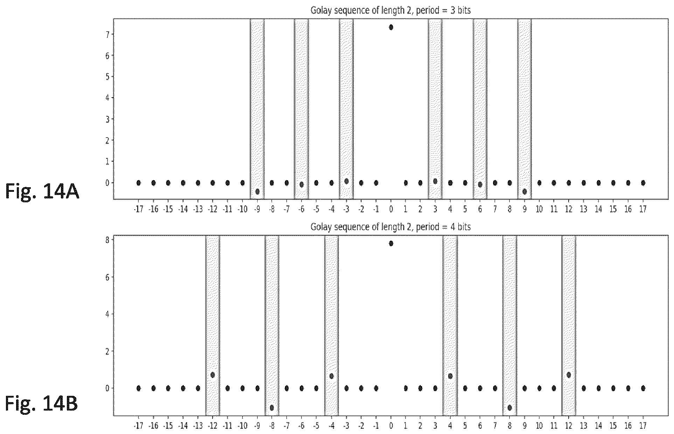

Figs. 14A and 14B illustrate examples of mask functions for eliminating artefacts for a sequence length Lcs = 4. In Fig. 14A, the inter-pulse interval Pi is 3 whereas in Fig. 14B the inter-pulse interval Pi is 4. In both cases, the peak width Ptw is 1. As per equation (3), the values n where artefacts appear are n = [-9, -6, -3, 3, 6, 9] for the case of Fig. 14A and n = [-12, -8, -4, 4, 8, 12] in the case of Fig. 14B. These are the positions where artefacts need to be eliminated.

Formula (3) may be used in step 1306 described hereinabove to generate the mask function, which is centered on n0 = 0. For example, the mask function may be represented by binary values wherein the value is zero at these positions n where artefacts appear and one elsewhere.

In step 1312, the mask corresponds to a vector of length 2*Lcs + 1 wherein Lcs is the length of the code sequence (in sampling points). Once the position n0 of a reflective peak is known, we can use the mask function generated in step 1306 and center it on the reflective peak located at n = n0 to set values of the mask. This may be repeated for each reflective peak in order to eliminate all artefacts.

### Choosing the inter-pulse intervals Pi / pulse rates Pr

In order to be able to generate the reconstructed OTDR trace after applying the mask which filters out some point, a proper combination of inter-pulse intervals Pi is selected so that, ideally, there is no overlap between the artefacts (e.g., the masked positions in Figs. 14A and 14B). Accordingly, the mask functions ideally do not show zeros at the same positions.

In order to achieve this, the combination of k inter-pulse intervals Pi should not satisfy the following condition for all values of n: ${∩}_{i = 1}^{k} \left(n% {Pi}_{i}\leq Ptw∧n\leq Lcs∗{Pi}_{i}\right) = ∅ ∀ 1 \leq n \leq Lcs ∗ {Pi}_{max}$ (4) wherein ${∩}_{i = 1}^{k}$ stands for the intersection of all sets defined for i = 1 to k and ∀ stands for 'for all'.

Put simply, we are looking for inter-pulse intervals Pi for which the least common multiple for all the inter-pulse intervals Piᵢ is greater than the length Lcs of the code sequence. For example, for a code sequence of 64, the combination of Pi = [3, 5, 7] satisfies the condition of Formula (4).

It should be noted that there exist many combinations of k inter-pulse intervals that satisfy this condition. However, it may be best to minimize the number of different inter-pulse intervals being used in order to minimize the number of acquisitions. It may also be aimed to minimize the duration of the inter-pulse intervals Pi in order to reduce the length (in time) of the coded sequence. Even though it may be possible to find a combination satisfying Formula (4), it may be more advantageous to find a compromise which does not fully meet the conditions but reduces the number of combinations and optimizes the acquisition time. If such a case, it is possible to interpolate the reconstructed OTDR trace on missing points.

### Other correlation-based OTDR Coded sequences

The Golay method respresents only one solution for eliminating autocorrelation sidelobes. For example, an alternative method is described in P.K. Sahu et al., "Optical time-domain reflectometer performance improvement using complementary correlated Prometheus orthonormal sequence", IET Optoelectron., 2008, Vol. 2, No. 3, pp. 128-133. This method uses a different set of equations to build a set of not two, but four complementary correlated sequences, known as CCPONS (Complementary Coded Prometheus Orthonormal Sequence). Compared to the Golay method, it shares the same property of enhancing OTDR dynamic range performance.

The method is similar but relies on a more complex set of four complementary sequences. These sequences are reconstructed using the same correlation method. This method relies on an autocorrelation of complementary sets but is built differently from the Golay method. The herein-proposed artefact correction method can be applied with this scheme just as well to reduce or eliminate artefacts.

The herein proposed arteract correction method may also be applied just as well to the method described in A. Naseem et al., "Composite coding scheme for OTDR SNR enhancement" ConTEL 2011, ISBN: 978-3-85125-161-6, where Complementary Correlation Codes and Simplex codes are combined to achieve higher gains.

There herein proposed arteract correction method can also be integrated into various schemes that combine complementary correlation codes to achieve higher gains.

### Example of CS-OTDR device architecture

Fig. 15 is a block diagram of a CS-OTDR device 1000 which may embody the CS-OTDR device 100 of the system of Fig. 2. The CS-OTDR device 1000 may comprise a digital device that, in terms of hardware architecture, generally includes a processor 1002, input/output (I/O) interfaces 1004, an optional radio 1006, a data store 1008, a memory 1010, as well as an optical test device including an OTDR acquisition device 1018. It should be appreciated by those of ordinary skill in the art that Fig. 15 depicts the CS-OTDR device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processor 1002 is a hardware device for executing software instructions. The processor 1002 may comprise one or more processors, including central processing units (CPU), auxiliary processor(s) or generally any device for executing software instructions. When the CS-OTDR device 1000 is in operation, the processor 1002 is configured to execute software stored within the memory 1010, to communicate data to and from the memory 1010, and to generally control operations of the OTDR device 1000 pursuant to the software instructions. In an embodiment, the processor 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzers or beepers, etc. The I/O interfaces 1004 can be used to display a graphical user interface (GUI) that enables a user to interact with the OTDR device 1000 and/or output at least one of the values derived by the OTDR analyzing module.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-loT); Long Term Evolution Machine Type Communication (LTE-M); magnetic induction; satellite data communication protocols; and any other protocols for wireless communication. The data store 1008 may be used to store data, such as OTDR traces and OTDR measurement data files. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Fig. 15, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the OTDR device 1000. For example, programs 1016 may include a web browser to connect with a server for transferring OTDR measurement data files, a dedicated OTDR application configured to control OTDR acquisitions by the OTDR acquisition device 1018, set OTDR acquisition parameters, analyze OTDR traces obtained by the OTDR acquisition device 1018 and display a GUI related to the OTDR device 1000. For example, the dedicated OTDR application may embody an OTDR analysis module configured to analyze acquired OTDR traces in order to characterize the optical fiber link under test, and produce OTDR measurement data files.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the OTDR device 1000 via the radio 106. In such cases, at least some of the programs 1016 may be located in a memory of such a mobile device, for execution by a processor of the physically distinct device. The mobile device may then also include a radio and be used to transfer OTDR measurement data files toward a remote test application residing, e.g., on a server.

It should be noted that the OTDR device shown in Fig. 15 is meant as an illustrative example only. Numerous types of computer systems are available and can be used to implement the OTDR device.

### Example of OTDR acquisition device architecture

Fig. 16 is a block diagram an embodiment of an OTDR acquisition device 1050 which may embody the OTDR acquisition device 1018 of the CS-OTDR device 1000 of Fig. 15.

The OTDR acquisition device 1050 is connectable toward the tested optical fiber link via an output interface 1064, for performing OTDR acquisitions toward the optical fiber link. The OTDR acquisition device 1050 comprises conventional optical hardware and electronics as known in the art for performing OTDR acquisitions over an optical fiber link.

The OTDR acquisition device 1050 comprises a light generating assembly 1054, a detection assembly 1056, a directional coupler 1058, as well as a controller 1070 and a data store 1072.

The light generating assembly 1054 is embodied by one or more laser source(s) 1060 driven by a pulse generator 1062 to generate the OTDR test signal comprising test light pulses having desired characteristics. As known in the art, the light generating assembly 1054 is adapted to generate test light pulses of varied pulse widths, repetition periods and optical power through a proper control of the pattern produced by the pulse generator 1062. The pulse generator 1062 may comprise a programmable pulse sequencer which may be used to generate the coded sequences for the pulse generator to drive the laser source(s) to generate pulsed test signals comprising a plurality of light pulses in accordance with an inter-pulse interval and a known coded sequence.

One skilled in the art will understand that it may be beneficial or required by the application to perform OTDR measurements at various different wavelengths. For this purpose, in some embodiments, the light generating assembly 1054 is adapted to generate test light pulses having varied wavelengths by employing a laser source 1060 that is tunable for example. It will be understood that the light generating assembly 1054 may combine both pulse width and wavelength control capabilities. Of course, different and/or additional components may be provided in the light generating assembly, such as modulators, lenses, mirrors, optical filters, wavelength selectors and the like.

The light generating assembly 1054 is coupled to the output interface 1064 of the OTDR acquisition device 1050 through a directional coupler 1058, such as a circulator, having three or more ports. The first port is connected to the light generating assembly 1054 to receive the test light pulses therefrom. The second port is connected toward the output interface 1064. The third port is connected to the detection assembly 1056. The connections are such that test light pulses generated by the light generating assembly 1054 are coupled to the output interface 1064 and that the return light signal arising from backscattering and reflections along the optical fiber link 110 is coupled to the detection assembly 1056.

The detection assembly 1056 comprises a light detector 1066, such as a photodiode, an avalanche photodiode or any other suitable photodetector, which detects the return light signal corresponding to each test light pulse, and an analog to digital converter 1068 to convert the electrical signal proportional to the detected return light signal from analog to digital in order to allow data storage and processing. It will be understood that the detected return light signal may of course be amplified, filtered or otherwise processed before analog to digital conversion. The power level of return light signal as a function of time, which is obtained from the detection and conversion above, is referred to as one acquisition of an OTDR trace. One skilled in the art will readily understand that in the context of OTDR methods and systems, each light acquisition generally involves propagating a large number of substantially identical light pulses in the optical fiber link and averaging the results, in order to improve the Signal-to-Noise Ratio (SNR). In this case, the result obtained from averaging is herein referred to as an OTDR trace.

Of course, the OTDR acquisition device 1050 may also be used to perform multiple acquisitions with varied pulse widths to obtain a multi-pulsewidth OTDR measurement.

The OTDR acquisition device 1050, and more specifically the light generating assembly 1054 is controlled by the controller 1070. The controller 1070 is a hardware logic device. It may comprise one or more Field Programmable Gate Array (FPGA); one or more Application Specific Integrated Circuits (ASICs) or one or more processors, configured with a logic state machine or stored program instructions. When the OTDR acquisition device 1050 is in operation, the controller 1070 is configured to control the OTDR measurement process. The controller 1070 controls parameters of the light generating assembly 1054 according to OTDR acquisition parameters that are either provided by the operator of the OTDR software or otherwise determined by program(s) 1016.

The data store 1072 may be used to cumulate raw data received from the detection assembly 1056, as well as intermediary averaged results and resulting OTDR traces. The data store 1008 may include any of volatile memory elements (e.g., random access memory (RAM, such as DRAM, SRAM, SDRAM, and the like)) or the like and it may be embedded with the controller 1070 or distinct.

The OTDR traces acquired by the OTDR acquisition device 1050 may be received and analyzed by one or more of the computer programs 1016 and/or stored in data store 1008 for further processing.

It should be noted that the architecture of the OTDR acquisition device 1050 as shown in Fig. 16 is meant as an illustrative example only. Numerous types of optical and electronic components are available and can be used to implement the OTDR acquisition device.

It will be appreciated that some embodiments described herein may include one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

The embodiments described above are intended to be exemplary only and one skilled in the art will recognize that numerous modifications can be made to these embodiments without departing from the scope of the invention. The scope of the invention is therefore intended to be limited solely by the appended claims.

## Claims

1. A coded-sequence OTDR method for characterizing an optical device under test, the OTDR method comprising:
performing (902) a plurality of coded-sequence OTDR acquisitions toward the optical device under test, wherein each OTDR acquisition is performed by propagating in the optical device under test, at least one pulsed test signal, each pulsed test signal comprising a series of light pulses in accordance with an inter-pulse interval and a known coded sequence and, for each pulsed test signal, detecting a return light signal from the optical device so as to obtain a corresponding acquisition signal;
from each acquisition signal or intermediate signals derived from acquisition signals, generating (904) an OTDR trace representing backscattered and reflected light as a function of distance in the optical device under test; and
combining (908) the plurality of OTDR traces to obtain a reconstructed OTDR trace;
**characterized in that**
said plurality of coded-sequence OTDR acquisitions are performed with mutually different inter-pulse intervals of their corresponding pulsed test signal.

2. The coded-sequence OTDR method as claimed in claim 1, further comprising:
applying a mask to each OTDR trace to eliminate portions of the OTDR trace where artefacts are located;
wherein said combining the plurality of OTDR traces combines the plurality of masked OTDR traces.

3. The coded-sequence OTDR method as claimed in claim 2, wherein the step of applying a mask further comprises:
for each coded-sequence OTDR acquisitions:
generating a mask function according to the corresponding inter-pulse interval; and
for each reflective event along the optical device under test, centering the mask function on a point corresponding to the reflective event in the OTDR trace to eliminate portions of the OTDR trace where artefacts are located and combining centered mask functions to generate said mask.

4. The coded-sequence OTDR method as claimed in claim 2 or 3, wherein said combining comprises, for each point along the reconstructed OTDR trace, averaging the un-masked OTDR traces.

5. The coded-sequence OTDR method as claimed in any one of claims 1 to 4, wherein the pulsed test signal comprises a binary coded pulse train and the known coded sequence comprises a binary coded sequence.

6. The coded-sequence OTDR method as claimed in claim 5,
wherein said at least one pulsed test signal comprises a set of pairs of pulsed test signals comprising a first pair of pulsed test signals coded according to a first coded sequence and a second pair of pulsed test signals coded according to a second coded sequence such that the set of pairs of coded sequences represent complementary bipolar correlation code sequences; and
wherein pulsed test signals of each pair of pulsed test signals represent the unipolar versions of its corresponding bipolar correlation code sequence;
whereby at least two pairs of acquisition signals (S_{OTDR}A_{+S}, S_{OTDR}A_{-S}, S_{OTDR}B_{+S}, S_{OTDR}B_{-S}) are obtained; and
the method further comprising:
subtracting the acquisition signals of said first pair from one another to obtain a first intermediate signals (S_{OTDR}A_{S}) and subtracting the acquisition signals of said second pair to obtain a second intermediate signals (S_{OTDR}B_{S}); and
for each of first and second intermediate signals, calculating a correlation between the corresponding intermediate signal and a coded sequence signal representative of the corresponding known coded sequence, and adding the correlations to one another to obtain the corresponding OTDR trace.

7. The coded-sequence OTDR method as claimed in claim 5, wherein said known sequence of pulses represents Golay-coded sequences of pulses or a Simplex sequence of pulses.

8. The coded-sequence OTDR method as claimed in any one of claims 1 to 4, wherein said known sequence of pulses comprises a chirped sequence of pulses.

9. A coded-sequence OTDR device for characterizing an optical device under test, the OTDR device comprising:
an OTDR acquisition device (1018) connectable toward an end of the optical device for performing plurality of coded-sequence OTDR acquisitions toward the optical device, wherein each OTDR acquisition is performed by propagating in the optical device under test, at least one pulsed test signal, each pulsed test signal comprising a series of light pulses in accordance with a pulse rate and a known coded sequence and, for each pulsed test signal, detecting a return light signal from the optical device so as to obtain a corresponding acquisition signal;
a processing **unit** (1002) receiving the acquisition signal and configured to perform the steps of:
from each acquisition signal or intermediate signals derived from acquisition signals, generating an OTDR trace representing backscattered and reflected light as a function of distance in the optical device under test; and
combining the plurality of OTDR traces to obtain a reconstructed OTDR trace;
**characterized in that**
said plurality of coded-sequence OTDR acquisitions are performed with mutually different inter-pulse intervals of their corresponding pulsed test signal.

10. The coded-sequence OTDR device as claimed in claim 9, wherein the processing unit is further configured to perform the steps of:
applying a mask to each OTDR trace to eliminate portions of the OTDR trace where artefacts are located; and
wherein said combining the plurality of OTDR traces combines the plurality of masked OTDR traces.

11. The coded-sequence OTDR device as claimed in claim 10, wherein the step of applying a mask further comprises:
for each coded-sequence OTDR acquisitions:
generating a mask function according to the corresponding inter-pulse interval; and
for each reflective event along the optical device under test, centering the mask function on a point corresponding to the reflective event in the OTDR trace to eliminate portions of the OTDR trace where artefacts are located and combining centered mask functions to generate said mask.

12. The coded-sequence OTDR device as claimed in claim 10 or 11, wherein said combining comprises, for each point along the reconstructed OTDR trace, averaging the un-masked OTDR traces.

13. The coded-sequence OTDR device as claimed in any one of claims 9 to 14, wherein the pulsed test signal comprises a binary coded pulse train and the known coded sequence comprises a binary coded sequence.

14. The coded-sequence OTDR device as device in claim 13,
wherein said at least one pulsed test signal comprises a set of pairs of pulsed test signals comprising a first pair of pulsed test signals coded according to a first coded sequence and a second pair of pulsed test signals coded according to a second coded sequence such that the set of pairs of coded sequences represent complementary bipolar correlation code sequences; and
wherein pulsed test signals of each pair of pulsed test signals represent the unipolar versions of its corresponding bipolar correlation code sequence;
whereby at least two pairs of acquisition signals (S_{OTDR}A_{+S}, S_{OTDR}A_{-S}, S_{OTDR}B_{+S}, S_{OTDR}B_{-S}) are obtained; and
the processing unit being further configured to perform the steps:
subtracting the acquisition signals of said first pair from one another to obtain a first intermediate signals (S_{OTDR}A_{S}) and subtracting the acquisition signals of said second pair to obtain a second intermediate signals (S_{OTDR}B_{S}); and
for each of first and second intermediate signals, calculating a correlation between the corresponding intermediate signal and a coded sequence signal representative of the corresponding known coded sequence, and adding the correlations to one another to obtain the corresponding OTDR trace.

15. A computer program comprising instructions that, when executed by a processor, cause the processor to perform a method comprising the steps of:
receiving data derived from at least one OTDR acquisition performed toward an optical device under test, wherein each OTDR acquisition is performed by propagating in the optical device under test, at least one pulsed test signal, each pulsed test signal comprising a series of light pulses in accordance with an inter-pulse interval and a known coded sequence and, for each pulsed test signal, detecting a return light signal from the optical device so as to obtain a corresponding acquisition **signal;**
from each acquisition signal or intermediate signals derived from acquisition signals, generating an OTDR trace representing backscattered and reflected light as a function of distance in the optical device under test; and
combining the plurality of OTDR traces to obtain a reconstructed OTDR trace;
**characterized in that**
said plurality of coded-sequence OTDR acquisitions are performed with mutually different inter-pulse intervals of their corresponding pulsed test signal.

## Patentansprüche

1. OTDR-Verfahren mit codierter Sequenz zum Kennzeichnen einer zu testenden optischen Vorrichtung, wobei das OTDR-Verfahren Folgendes umfasst:
Durchführen (902) einer Vielzahl von OTDR-Erfassungen mit codierter Sequenz zu der zu testenden optischen Vorrichtung, wobei jede OTDR-Erfassung durch Verbreiten, in der zu testenden optischen Vorrichtung, von zumindest einem gepulsten Testsignal durchgeführt wird, wobei jedes gepulste Testsignal eine Reihe von Lichtimpulsen gemäß einem Zwischenimpulsintervall und einer bekannten codierten Sequenz umfasst, und, für jedes gepulste Testsignal, Detektieren eines Rückkehrlichtsignals von der optischen Vorrichtung, um ein entsprechendes Erfassungssignal zu erhalten;
aus jedem Erfassungssignal oder Zwischensignalen, die von Erfassungssignalen stammen, Erzeugen (904) einer OTDR-Spur, die rückgestreutes und reflektiertes Licht in Abhängigkeit von Entfernung in der zu testenden optischen Vorrichtung darstellt; und
Kombinieren (908) der Vielzahl von OTDR-Spuren, um eine rekonstruierte OTDR-Spur zu erhalten;
**dadurch gekennzeichnet, dass**
die Vielzahl von OTDR-Erfassungen mit codierter Sequenz mit gegenseitig unterschiedlichen Zwischenimpulsintervallen ihres entsprechenden gepulsten Testsignals durchgeführt wird.

2. OTDR-Verfahren mit codierter Sequenz nach Anspruch 1, ferner umfassend:
Anwenden einer Maske auf jede OTDR-Spur, um Teile der OTDR-Spur zu eliminieren, in denen sich Artefakte befinden;
das Kombinieren der Vielzahl von OTDR-Spuren die Vielzahl von maskierten OTDR-Spuren kombiniert.

3. OTDR-Verfahren mit codierter Sequenz nach Anspruch 2, wobei der Schritt des Anwendens einer Maske ferner Folgendes umfasst:
für jede OTDR-Erfassungen mit codierter Sequenz:
Erzeugen einer Maskenfunktion gemäß dem entsprechenden Zwischenimpulsintervall; und
für jedes reflektierende Ereignis entlang der zu testenden optischen Vorrichtung, Zentrieren der Maskenfunktion auf einen Punkt entsprechend dem reflektierenden Ereignis in der OTDR-Spur, um Teile der OTDR-Spur zu eliminieren, in denen sich Artefakte befinden, und Kombinieren von zentrierten Maskenfunktionen, um die Maske zu erzeugen.

4. OTDR-Verfahren mit codierter Sequenz nach Anspruch 2 oder 3, wobei das Kombinieren für jeden Punkt entlang der rekonstruierten OTDR-Spur Mitteln der unmaskierten OTDR-Spuren umfasst.

5. OTDR-Verfahren mit codierter Sequenz nach einem der Ansprüche 1 bis 4, wobei das gepulste Testsignal eine binär codierte Impulsfolge umfasst und die bekannte codierte Sequenz eine binär codierte Sequenz umfasst.

6. OTDR-Verfahren mit codierter Sequenz nach Anspruch 5,
wobei das zumindest eine gepulste Testsignal einen Satz von Paaren von gepulsten Testsignalen umfasst, umfassend ein erstes Paar von gepulsten Testsignalen, das gemäß einer ersten codierten Sequenz codiert ist, und ein zweites Paar von gepulsten Testsignalen, das gemäß einer zweiten codierten Sequenz codiert ist, sodass der Satz von Paaren von codierten Sequenzen komplementäre bipolare Korrelationscodesequenzen darstellt; und
wobei gepulste Testsignale jedes Paares von gepulsten Testsignalen die unipolaren Versionen seiner entsprechenden bipolaren Korrelationscodesequenz darstellen;
wodurch zumindest zwei Paare von Erfassungssignalen (S_{OTDR}A_{+S}, S_{OTDR}A_{-S}, S_{OTDR}B_{+S}, S_{OTDR}B_{-S}) erhalten werden; und
das Verfahren ferner Folgendes umfasst:
Subtrahieren der Erfassungssignale des ersten Paares voneinander, um ein erstes Zwischensignale (S_{OTDR}A_{S}) zu erhalten, und Subtrahieren der Erfassungssignale des zweiten Paares, um ein zweites Zwischensignale (S_{OTDR}B_{S}) zu erhalten; und
für jedes von ersten und zweiten Zwischensignalen, Berechnen einer Korrelation zwischen dem entsprechenden Zwischensignal und einem codierten Sequenzsignal, das für die entsprechende bekannte codierte Sequenz repräsentativ ist, und Addieren der Korrelationen miteinander, um die entsprechende OTDR-Spur zu erhalten.

7. OTDR-Verfahren mit codierter Sequenz nach Anspruch 5, wobei die bekannte Sequenz von Impulsen Golay-codierte Sequenzen von Impulsen oder eine Simplexsequenz von Impulsen darstellt.

8. OTDR-Verfahren mit codierter Sequenz nach einem der Ansprüche 1 bis 4, wobei die bekannte Sequenz von Impulsen eine gechirpte Sequenz von Impulsen umfasst.

9. OTDR-Vorrichtung mit codierter Sequenz zum Kennzeichnen einer zu testenden optischen Vorrichtung, wobei die OTDR-Vorrichtung Folgendes umfasst:
eine OTDR-Erfassungsvorrichtung (1018), die zu einem Ende der optischen Vorrichtung verbindbar ist, um Vielzahl von OTDR-Erfassungen mit codierter Sequenz zu der optischen Vorrichtung durchzuführen, wobei jede OTDR-Erfassung durch Verbreiten, in der zu testenden optischen Vorrichtung, von zumindest einem gepulsten Testsignal durchgeführt wird, wobei jedes gepulste Testsignal eine Reihe von Lichtimpulsen gemäß einer Impulsrate und einer bekannten codierten Sequenz umfasst, und, für jedes gepulste Testsignal, Detektieren eines Rückkehrlichtsignals von der optischen Vorrichtung, um ein entsprechendes Erfassungssignal zu erhalten;
eine Verarbeitungseinheit (1002), die das Erfassungssignal empfängt und dazu konfiguriert ist, die folgenden Schritte durchzuführen:
aus jedem Erfassungssignal oder Zwischensignalen, die von Erfassungssignalen stammen, Erzeugen einer OTDR-Spur, die rückgestreutes und reflektiertes Licht in Abhängigkeit von Entfernung in der zu testenden optischen Vorrichtung darstellt; und
Kombinieren der Vielzahl von OTDR-Spuren, um eine rekonstruierte OTDR-Spur zu erhalten;
**dadurch gekennzeichnet, dass**
die Vielzahl von OTDR-Erfassungen mit codierter Sequenz mit gegenseitig unterschiedlichen Zwischenpulsintervallen ihres entsprechenden gepulsten Testsignals durchgeführt wird.

10. OTDR-Vorrichtung mit codierter Sequenz nach Anspruch 9, wobei die Verarbeitungseinheit ferner dazu konfiguriert ist, die folgenden Schritte durchzuführen:
Anwenden einer Maske auf jede OTDR-Spur, um Teile der OTDR-Spur zu eliminieren, in denen sich Artefakte befinden; und
wobei das Kombinieren der Vielzahl von OTDR-Spuren die Vielzahl von maskierten OTDR-Spuren kombiniert.

11. OTDR-Vorrichtung mit codierter Sequenz nach Anspruch 10, wobei der Schritt des Anwendens einer Maske ferner Folgendes umfasst:
für jede OTDR-Erfassungen mit codierter Sequenz:
Erzeugen einer Maskenfunktion gemäß dem entsprechenden Zwischenimpulsintervall; und
für jedes reflektierende Ereignis entlang der zu testenden optischen Vorrichtung, Zentrieren der Maskenfunktion auf einen Punkt entsprechend dem reflektierenden Ereignis in der OTDR-Spur, um Teile der OTDR-Spur zu eliminieren, in denen sich Artefakte befinden, und Kombinieren von zentrierten Maskenfunktionen, um die Maske zu erzeugen.

12. OTDR-Vorrichtung mit codierter Sequenz nach Anspruch 10 oder 11, wobei das Kombinieren für jeden Punkt entlang der rekonstruierten OTDR-Spur Mitteln der unmaskierten OTDR-Spuren umfasst.

13. OTDR-Vorrichtung mit codierter Sequenz nach einem der Ansprüche 9 bis 14, wobei das gepulste Testsignal eine binär codierte Impulsfolge umfasst und die bekannte codierte Sequenz eine binär codierte Sequenz umfasst.

14. OTDR-Vorrichtung mit codierter Sequenz als Vorrichtung nach Anspruch 13,
wobei das zumindest eine gepulste Testsignal einen Satz von Paaren von gepulsten Testsignalen umfasst, umfassend ein erstes Paar von gepulsten Testsignalen, das gemäß einer ersten codierten Sequenz codiert ist, und ein zweites Paar von gepulsten Testsignalen, das gemäß einer zweiten codierten Sequenz codiert ist, sodass der Satz von Paaren von codierten Sequenzen komplementäre bipolare Korrelationscodesequenzen darstellt; und
wobei gepulste Testsignale jedes Paares von gepulsten Testsignalen die unipolaren Versionen seiner entsprechenden bipolaren Korrelationscodesequenz darstellen;
wodurch zumindest zwei Paare von Erfassungssignalen (S_{OTDR}A_{+S}, S_{OTDR}A_{-S}, S_{OTDR}B_{+S}, S_{OTDR}B_{-S}) erhalten werden; und
die Verarbeitungseinheit ferner dazu konfiguriert ist, die folgenden Schritte durchzuführen:
Subtrahieren der Erfassungssignale des ersten Paares voneinander, um ein erstes Zwischensignale (S_{OTDR}A_{S}) zu erhalten, und Subtrahieren der Erfassungssignale des zweiten Paares, um ein zweites Zwischensignale (S_{OTDR}B_{S}) zu erhalten; und
für jedes von ersten und zweiten Zwischensignalen, Berechnen einer Korrelation zwischen dem entsprechenden Zwischensignal und einem codierten Sequenzsignal, das für die entsprechende bekannte codierte Sequenz repräsentativ ist, und Addieren der Korrelationen miteinander, um die entsprechende OTDR-Spur zu erhalten.

15. Computerprogramm, das Anweisungen umfasst, die, wenn durch einen Prozessor ausgeführt, den Prozessor dazu veranlassen, ein Verfahren durchzuführen, umfassend die folgenden Schritte: Empfangen von Daten, die von zumindest einer OTDR-Erfassung stammen, die zu einer zu testenden optischen Vorrichtung durchgeführt wird, wobei jede OTDR-Erfassung durch Verbreiten, in der zu testenden optischen Vorrichtung, von zumindest einem gepulsten Testsignal durchgeführt wird, wobei jedes gepulste Testsignal eine Reihe von Lichtimpulsen gemäß einem Zwischenimpulsintervall und einer bekannten codierten Sequenz umfasst, und, für jedes gepulste Testsignal, Detektieren eines Rückkehrlichtsignals von der optischen Vorrichtung, um ein entsprechendes Erfassungssignal zu erhalten;
aus jedem Erfassungssignal oder Zwischensignalen, die von Erfassungssignalen stammen, Erzeugen einer OTDR-Spur, die rückgestreutes und reflektiertes Licht in Abhängigkeit von Entfernung in der zu testenden optischen Vorrichtung darstellt; und
Kombinieren der Vielzahl von OTDR-Spuren, um eine rekonstruierte OTDR-Spur zu erhalten;
**dadurch gekennzeichnet, dass**
die Vielzahl von OTDR-Erfassungen mit codierter Sequenz mit gegenseitig unterschiedlichen Zwischenimpulsintervallen ihres entsprechenden gepulsten Testsignals durchgeführt wird.

## Revendications

1. Procédé OTDR à séquence codée destiné à caractériser un dispositif optique en cours d'essai, le procédé OTDR comprenant :
la réalisation (902) d'une pluralité d'acquisitions OTDR à séquence codée vers le dispositif optique en cours d'essai, dans lequel chaque acquisition OTDR est réalisée en propageant dans le dispositif optique en cours d'essai, au moins un signal d'essai pulsé, chaque signal d'essai pulsé comprenant une série d'impulsions lumineuses conformément à un intervalle interimpulsionnel et une séquence codée connue et, pour chaque signal d'essai pulsé, la détection d'un signal lumineux de retour en provenance du dispositif optique de manière à obtenir un signal d'acquisition correspondant ;
à partir de chaque signal d'acquisition ou de signaux intermédiaires dérivés des signaux d'acquisition, la génération (904) d'une trace OTDR représentant la lumière rétrodiffusée et réfléchie en fonction de la distance dans le dispositif optique en cours d'essai ; et
la combinaison (908) de la pluralité de traces OTDR pour obtenir une trace OTDR reconstruite ;
**caractérisé en ce que** ladite pluralité d'acquisitions OTDR à séquence codée sont réalisées avec des intervalles interimpulsionnels mutuellement différents de leur signal d'essai pulsé correspondant.

2. Procédé OTDR à séquence codée selon la revendication 1, comprenant en outre :
l'application d'un masque à chaque trace OTDR pour éliminer des parties de la trace OTDR où des artefacts sont situés ;
dans lequel ladite combinaison de la pluralité de traces OTDR combine la pluralité de traces OTDR masquées.

3. Procédé OTDR à séquence codée selon la revendication 2, dans lequel l'étape d'application d'un masque comprend en outre :
pour chaque acquisitions OTDR à séquence codée :
la génération d'une fonction de masque conformément à l'intervalle interimpulsionnel correspondant ; et
pour chaque événement réfléchissant le long du dispositif optique en cours d'essai, le centrage de la fonction de masque sur un point correspondant à l'événement réfléchissant dans la trace OTDR pour éliminer des parties de la trace OTDR où se situent des artefacts et la combinaison des fonctions de masque centrées pour générer ledit masque.

4. Procédé OTDR à séquence codée selon la revendication 2 ou 3, dans lequel ladite combinaison comprend, pour chaque point le long de la trace OTDR reconstruite, le calcul de la moyenne des traces OTDR non masquées.

5. Procédé OTDR à séquence codée selon l'une quelconque des revendications 1 à 4, dans lequel le signal d'essai pulsé comprend un train d'impulsions codé binaire et la séquence codée connue comprend une séquence codée binaire.

6. Procédé OTDR à séquence codée selon la revendication 5,
dans lequel ledit au moins un signal d'essai pulsé comprend un ensemble de paires de signaux d'essai pulsés comprenant une première paire de signaux d'essai pulsés codés selon une première séquence codée et une seconde paire de signaux d'essai pulsés codés selon une seconde séquence codée de sorte que l'ensemble de paires de séquences codées représente des séquences de codes de corrélation bipolaires complémentaires ; et
dans lequel les signaux d'essai pulsés de chaque paire de signaux d'essai pulsés représentent les versions unipolaires de sa séquence de code de corrélation bipolaire correspondante ;
moyennant quoi au moins deux paires de signaux d'acquisition (S_{OTDR}A_{+S}, S_{OTDR}A_{-S}, S_{OTDR}B_{+S}, S_{OTDR}B_{-S}) sont obtenues ; et
le procédé comprenant en outre :
la soustraction des signaux d'acquisition de ladite première paire l'un de l'autre afin d'obtenir un premier signaux intermédiaire (_{SOTDR}A_{S}) et la soustraction des signaux d'acquisition de ladite seconde paire afin d'obtenir un second signaux intermédiaire (S_{OTDR}B_{S}) ; et
pour chacun des premier et second signaux intermédiaires, le calcul d'une corrélation entre le signal intermédiaire correspondant et un signal de séquence codée représentatif de la séquence codée connue correspondante, et l'ajout des corrélations les unes aux autres pour obtenir la trace OTDR correspondante.

7. Procédé OTDR à séquence codée selon la revendication 5, dans lequel ladite séquence d'impulsions connue représente des séquences d'impulsions à code de Golay ou une séquence d'impulsions Simplex.

8. Procédé OTDR à séquence codée selon l'une quelconque des revendications 1 à 4, dans lequel ladite séquence connue d'impulsions comprend une séquence d'impulsions à dérive de fréquence.

9. Dispositif OTDR à séquence codée destiné à caractériser un dispositif optique en cours d'essai, le dispositif OTDR comprenant :
un dispositif d'acquisition OTDR (1018) pouvant être connecté vers une extrémité du dispositif optique pour réaliser une pluralité d'acquisitions OTDR à séquence codée vers le dispositif optique, dans lequel chaque acquisition OTDR est réalisée en propageant dans le dispositif optique en cours d'essai, au moins un signal d'essai pulsé, chaque signal d'essai pulsé comprenant une série d'impulsions lumineuses conformément à une fréquence d'impulsions et une séquence codée connue et, pour chaque signal d'essai pulsé, la détection d'un signal lumineux de retour en provenance du dispositif optique de manière à obtenir un signal d'acquisition correspondant ;
une unité de traitement (1002) recevant le signal d'acquisition et configurée pour réaliser les étapes de :
à partir de chaque signal d'acquisition ou de signaux intermédiaires dérivés de signaux d'acquisition, génération d'une trace OTDR représentant la lumière rétrodiffusée et réfléchie en fonction de la distance dans le dispositif optique en cours d'essai ; et
combinaison de la pluralité de traces OTDR afin d'obtenir une trace OTDR reconstruite ;
**caractérisé en ce que** ladite pluralité d'acquisitions OTDR à séquence codée sont réalisées avec des intervalles interimpulsionnels mutuellement différents de leur signal d'essai pulsé correspondant.

10. Dispositif OTDR à séquence codée selon la revendication 9, dans lequel l'unité de traitement est en outre configurée pour réaliser les étapes de :
application d'un masque à chaque trace OTDR pour éliminer des parties de la trace OTDR où se situent des artefacts ; et
dans lequel ladite combinaison de la pluralité de traces OTDR combine la pluralité de traces OTDR masquées.

11. Dispositif OTDR à séquence codée selon la revendication 10, dans lequel l'étape d'application d'un masque comprend en outre :
pour chaque acquisitions OTDR à séquence codée :
la génération d'une fonction de masque conformément à l'intervalle interimpulsionnel correspondant ; et
pour chaque événement réfléchissant le long du dispositif optique en cours d'essai, le centrage de la fonction de masque sur un point correspondant à l'événement réfléchissant dans la trace OTDR afin d'éliminer des parties de la trace OTDR où se situent des artefacts et la combinaison des fonctions de masque centrées pour générer ledit masque.

12. Dispositif OTDR à séquence codée selon la revendication 10 ou 11, dans lequel ladite combinaison comprend, pour chaque point le long de la trace OTDR reconstruite, le calcul de la moyenne des traces OTDR non masquées.

13. Dispositif OTDR à séquence codée selon l'une quelconque des revendications 9 à 14, dans lequel le signal d'essai pulsé comprend un train d'impulsions codé binaire et la séquence codée connue comprend une séquence codée binaire.

14. Dispositif OTDR à séquence codée comme dispositif selon la revendication 13,
dans lequel ledit au moins un signal d'essai pulsé comprend un ensemble de paires de signaux d'essai pulsés comprenant une première paire de signaux d'essai pulsés codés selon une première séquence codée et une seconde paire de signaux d'essai pulsés codés selon une seconde séquence codée de sorte que l'ensemble de paires de séquences codées représente des séquences de codes de corrélation bipolaires complémentaires ; et
dans lequel les signaux d'essai pulsés de chaque paire de signaux d'essai pulsés représentent les versions unipolaires de sa séquence de code de corrélation bipolaire correspondante ;
moyennant quoi au moins deux paires de signaux d'acquisition (S_{OTDR}A_{+S}, S_{OTDR}A_{-S}, S_{OTDR}B_{+S}, S_{OTDR}B_{-S}) sont obtenues ; et
l'unité de traitement étant en outre configurée pour réaliser les étapes de :
soustraction des signaux d'acquisition de ladite première paire l'un de l'autre pour obtenir un premier signaux intermédiaire (S_{OTDR}A_{S}) et soustraction des signaux d'acquisition de ladite seconde paire pour obtenir un second signaux intermédiaire (S_{OTDR}B_{S}) ; et
pour chacun des premier et second signaux intermédiaires, calcul d'une corrélation entre le signal intermédiaire correspondant et un signal de séquence codée représentatif de la séquence codée connue correspondante, et ajout des corrélations les unes aux autres afin d'obtenir la trace OTDR correspondante.

15. Programme informatique comprenant des instructions qui, lorsqu'elles sont exécutées par un processeur, amènent le processeur à réaliser un procédé comprenant les étapes de :
réception de données dérivées d'au moins une acquisition OTDR réalisée vers un dispositif optique en cours d'essai, dans lequel chaque acquisition OTDR est réalisée en propageant dans le dispositif optique en cours d'essai, au moins un signal d'essai pulsé, chaque signal d'essai pulsé comprenant une série d'impulsions lumineuses conformément à un intervalle interimpulsionnel et une séquence codée connue et, pour chaque signal d'essai pulsé, détection d'un signal lumineux de retour en provenance du dispositif optique de manière à obtenir un signal d'acquisition correspondant ;
à partir de chaque signal d'acquisition ou de signaux intermédiaires dérivés de signaux d'acquisition, la génération d'une trace OTDR représentant la lumière rétrodiffusée et réfléchie en fonction de la distance dans le dispositif optique en cours d'essai ; et
combinaison de la pluralité de traces OTDR afin d'obtenir une trace OTDR reconstruite ;
**caractérisé en ce que** ladite pluralité d'acquisitions OTDR à séquence codée sont réalisées avec des intervalles interimpulsionnels mutuellement différents de leur signal d'essai pulsé correspondant.
